(19) Europäisches Patentamt / European Patent Office / Office européen des brevets

(11) **EP 1 896 824 B1**

(12) **FASCICULE DE BREVET EUROPEEN**

(45) Date de publication et mention de la délivrance du brevet:
**01.10.2008 Bulletin 2008/40**

(21) Numéro de dépôt: **06764801.4**

(22) Date de dépôt: **21.06.2006**

(51) Int Cl.:
*G01N 13/16* (2006.01)   *G12B 21/20* (2006.01)

(86) Numéro de dépôt international:
**PCT/FR2006/001406**

(87) Numéro de publication internationale:
**WO 2006/136705 (28.12.2006 Gazette 2006/52)**

(54) **MICROSCOPE A FORCE ATOMIQUE A HARMONIQUE SUPERIEUR**

RASTERKRAFTMIKROSKOP MIT OBERSCHWINGUNGEN

HIGHER HARMONICS ATOMIC FORCE MICROSCOPE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.06.2005 FR 0506402**

(43) Date de publication de la demande:
**12.03.2008 Bulletin 2008/11**

(73) Titulaires:
• **CENTRE NATIONAL DE LA RECHERCHE SCIENTIFIQUE (CNRS)**
  75794 Paris Cedex 16 (FR)
• **Université de Montpellier II**
  34095 Montpellier Cedex 5 (FR)

(72) Inventeurs:
• **GIRARD, Paul**
  F-34090 Montpellier (FR)
• **RAMONDA, Michel**
  F-34160 Saint Drezery (FR)
• **ARINERO, Richard**
  F-34000 Montpellier (FR)

(74) Mandataire: **Bredema**
  38, avenue de l'Opéra
  75002 Paris (FR)

(56) Documents cités:
**US-A- 6 006 593**

• **SAHIN O ET AL: "Harmonic cantilevers for nanomechanical, sensing of elastic properties" TRANSDUCERS, SOLID-STATE SENSORS, ACTUATORS AND MICROSYSTEMS, 12TH INNATIONAL CONFERENCE ON, 2003, PISCATAWAY, NJ, USA,IEEE, vol. 2, 9 juin 2003 (2003-06-09), pages 1124-1127, XP010647828 ISBN: 0-7803-7731-1**
• **YAMANAKA K ET AL: "Ultrasonic atomic force microscope with overtone excitation of cantilever" JAPANESE JOURNAL OF APPLIED PHYSICS, JAPAN SOCIETY OF APPLIED PHYSICS, TOKYO, JP, vol. 35, no. 6B, juin 1996 (1996-06), pages 3787-3792, XP002338677 ISSN: 0021-4922**
• **STARK ROBERT W ET AL: "Tapping-mode atomic force microscopy and phase-imaging in higher eigenmodes" APPLIED PHYSICS LETTERS, AIP, AMERICAN INSTITUTE OF PHYSICS, MELVILLE, NY, US, vol. 74, no. 22, 31 mai 1999 (1999-05-31), pages 3296-3298, XP012022803 ISSN: 0003-6951 cité dans la demande**
• **SCHIENER J ET AL: "Stabilized atomic force microscopy imaging in liquids using second harmonic of cantilever motion for setpoint control" REVIEW OF SCIENTIFIC INSTRUMENTS AIP USA, vol. 75, no. 8, août 2004 (2004-08), pages 2564-2568, XP002355046 ISSN: 0034-6748**
• **SAHIN O ET AL: "Resonant harmonic response in tapping-mode atomic force microscopy" PHYSICAL REVIEW B (CONDENSED MATTER AND MATERIALS PHYSICS) APS THROUGH AIP USA, vol. 69, no. 16, 15 avril 2004 (2004-04-15), pages 165416-1-165416-9, XP002355047 ISSN: 0163-1829**

**Description**

La présente invention se rapporte au domaine des microscopes à champ proche en mode vibrant.

Elle se rapporte plus particulièrement à de tels microscopes fonctionnant en mode « amplitude contrôlée ou régulée ».

Le principe général des microscopes à champ proche en mode vibrant est connu de l'homme du métier. Dans un tel dispositif, un capteur est mis en vibration au voisinage de sa fréquence de résonance fondamentale et, lorsqu'on l'approche de l'objet à analyser, son amplitude de vibration se trouve réduite. Il peut y avoir deux raisons pour cela. Selon un premier mode, le capteur détecte des forces à long rayon d'action, de type électromagnétique. Dans ce cas, l'oscillateur change légèrement de fréquence de résonance et voit son amplitude d'oscillation forcée changer. Ceci est connu sous le nom de mode « sans contact ». Selon un second mode, le capteur oscille en venant au contact intermittent du matériau, l'amplitude de vibration étant limitée par le contact à l'objet. Ce mode est connu sous le nom de contact intermittent ou, en langue anglaise, mode « tapping».

De façon générale, on réalise un balayage de l'objet à analyser sensiblement dans le plan de la surface de l'objet (ci-après en xy), et une boucle de rétroaction ajuste la position en z de l'objet pour maintenir l'amplitude de vibration à une valeur de consigne. Les variations de position en z donnent alors la morphologie du matériau.

À l'air ou sous atmosphère contrôlée, la rétroaction a lieu sur l'amplitude de vibration alors que sous vide, la rétroaction a lieu, dans les systèmes connus, sur le glissement de fréquence de résonance, et ce à cause des limitations sur le temps de réponse de l'oscillateur, comme ceci sera développé par la suite.

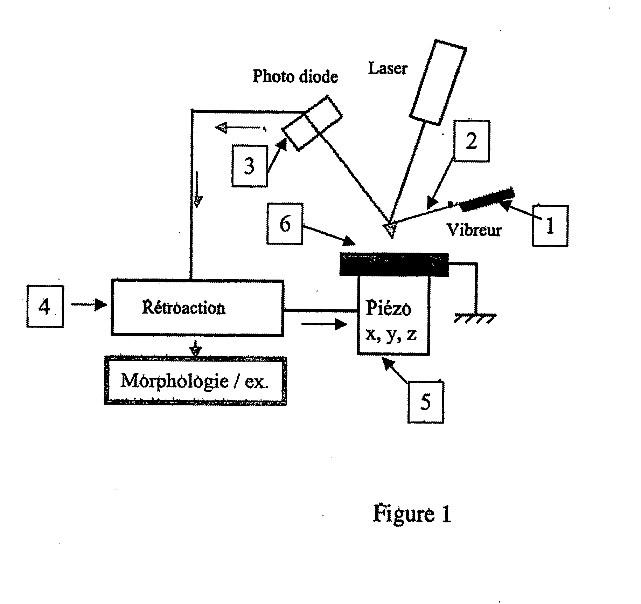

La figure 1 donne un exemple du principe général du microscope à force atomique dans lequel un vibreur 1 excite un capteur 2, composé d'un bras de levier et d'un embout de sonde (ou pointe) à son extrémité. Le mouvement du levier fait varier le signal réfléchi du laser - positionné au niveau de l'embout de sonde-, qui est alors détecté par une photodiode 3. Le signal issu de la photodiode est alors utilisé pour contrôler une unité de rétroaction 4 qui contrôle un dispositif piézo-électrique en x,y,z 5 associé à l'échantillon 6, la rétroaction ayant lieu sur la composante z, et un balayage étant réalisé en x,y. La morphologie de l'échantillon 6 est alors obtenue en sortie de la boucle de contre-réaction.

Une première limite à de tels dispositifs est la réalisation de l'imagerie rapide, en particulier pour des images à haute résolution, si l'on désire par exemple obtenir des images de 4096*4096 pixels, à l'air ou sous atmosphère contrôlée et, à plus forte raison, sous vide. La limite physique du dispositif est alors le temps de réponse de l'oscillateur à une perturbation locale.

En effet, la constante de temps de stabilisation est de l'ordre de 2 ms dans l'air à cause des phénomènes d'amortissement, et passe à 800 ms dans le vide. Cette différence ne permet pas encore, pour les systèmes existants, d'obtenir une vitesse de balayage compatible avec les exigences en matière de temps de traitement.

Plus précisément, un oscillateur possédant un coefficient de qualité Q et vibrant à une fréquence de résonance $f_0$ (ou une période $T_0$), met un temps $T=Q*T_0$ pour passer d'un état stable à un autre état stable. Le coefficient de qualité est par ailleurs défini par rapport à la largeur fréquentielle df de la courbe de résonance. Il est connu que cette fréquence est celle donnant une amplitude égale à $\dfrac{1}{\sqrt{2}} \times A_0$, $A_0$ étant l'amplitude maximale. On a alors $Q=f_0/df$.

La vitesse de balayage est donc limitée par le temps T de stabilisation de l'oscillateur entre plusieurs pixels successifs.

Plusieurs solutions de contrôle du facteur de qualité Q existent dans l'art antérieur, mais aucune n'est réellement satisfaisante pour une utilisation du dispositif dans le vide ou l'ultra-vide (UHV). Un exemple d'un tel contrôle est donné dans la première publication sur ce sujet « Regulation of a micro-cantilever response by force feedback », Applied Physics Letters, Volume 62 (19), 2344, 10 Mai 1993, J.Mertz, O. Marti, J. Mlynek.

La présente invention entend donc proposer un nouveau microscope à force atomique qui permette à la fois de maintenir et même accroître les performances dans l'air (ou atmosphère contrôlée), mais qui puisse également fonctionner dans le vide ou l'ultra-vide. Selon un aspect de l'invention, on réduit donc le facteur de qualité de l'oscillateur de façon originale, en travaillant non plus sur le fondamental du capteur, mais sur des harmoniques d'ordre supérieur.

Il est connu, notamment de la publication de Stark et al. « Tapping-mode atomic foce microscopy and phase-imaging in higher eigenmodes », 1999, d'utiliser un harmonique d'ordre supérieur dans un microscope à force atomique. Dans la publication de Stark et al., le premier harmonique est utilisé dans des conditions ambiantes.

Toutefois, le système décrit dans la publication susmentionnée ne permet pas de faire fonctionner le système à des harmoniques différents du premier harmonique.

Dans la publication de O. Sahin et al., "Harmonic Cantilevers for Nanomechanical Sensing of Elastic Properties", proceedings de Transducers '03, pages 1124-1127, XP10647828, on utilise un harmonique d'ordre supérieur dans un microscope à force atomique en mode "tapping".

Par ailleurs, le système décrit dans la publication susmentionnée ne permet pas de choisir l'harmonique supérieure la plus adaptée au bon fonctionnement du système.

La présente invention a pour but de pallier les inconvénients de l'art antérieur.

Un but de l'invention est d'améliorer le fonctionnement des microscopes à force atomique connus.

Un autre but de l'invention est d'améliorer le facteur de qualité d'un microscope à force atomique, notamment dans le vide ou sous atmosphère contrôlée.

Un autre but de l'invention est de fournir un microscope à force atomique comprenant un embout de sonde et dont l'embout de sonde puisse osciller à des fréquences selon une pluralité d'harmoniques d'un bras de levier.

Un autre but de l'invention est de fournir un microscope à force atomique comprenant un embout de sonde, l'embout de sonde pouvant osciller à des fréquences selon différentes harmoniques, et l'harmonique choisie étant adaptée à la qualité de fonctionnement du microscope.

Un autre but de l'invention est de fournir un microscope à force atomique comprenant un embout de sonde, l'embout de sonde pouvant osciller à des fréquences selon différentes harmoniques, et dans lequel l'harmonique choisie est adaptée à la qualité de fonctionnement du microscope, même dans le vide ou sous atmosphère contrôlée.

Un autre but de l'invention est de fournir un microscope à force atomique comprenant un embout de sonde, l'embout de sonde pouvant osciller à des fréquences selon différentes harmoniques, le choix de l'harmonique pouvant être réalisé de façon automatique.

Pour ce faire, la présente invention concerne un Procédé de mesure des caractéristiques de la surface d'un échantillon à partir d'un embout de sonde placé sur une extrémité d'un bras de levier ledit bras de levier étant apte à osciller par l'intermédiaire d'un vibreur, dans un système de microscopie à force atomique, comprenant les étapes consistant à :

- faire osciller ledit embout du bras de levier selon une première fréquence d'oscillation correspondant à un fondamental dudit bras de levier ;
- produire un signal représentatif de ladite oscillation
- définir un paramètre correspondant à un seuil de fonctionnement dudit système de microscopie
- analyser ledit signal et, si ledit signal correspond à un état dudit système supérieur audit seuil de fonctionnement,

  o faire varier la fréquence d'oscillation dudit embout du bras de levier en changeant la fréquence d'excitation du vibreur selon au moins un harmonique d'ordre supérieur dudit bras de levier.
  o Sélectionner un desdits harmoniques d'ordre supérieur correspondant pour lequel Le signal représentatif de l'oscillation correspond à un état du système inférieur ou égal audit seuil de fonctionnement ;

- Faire interagir ledit embout de sonde oscillant audit harmonique supérieur sélectionné pour la mesure des caractéristiques de la surface dudit échantillon.

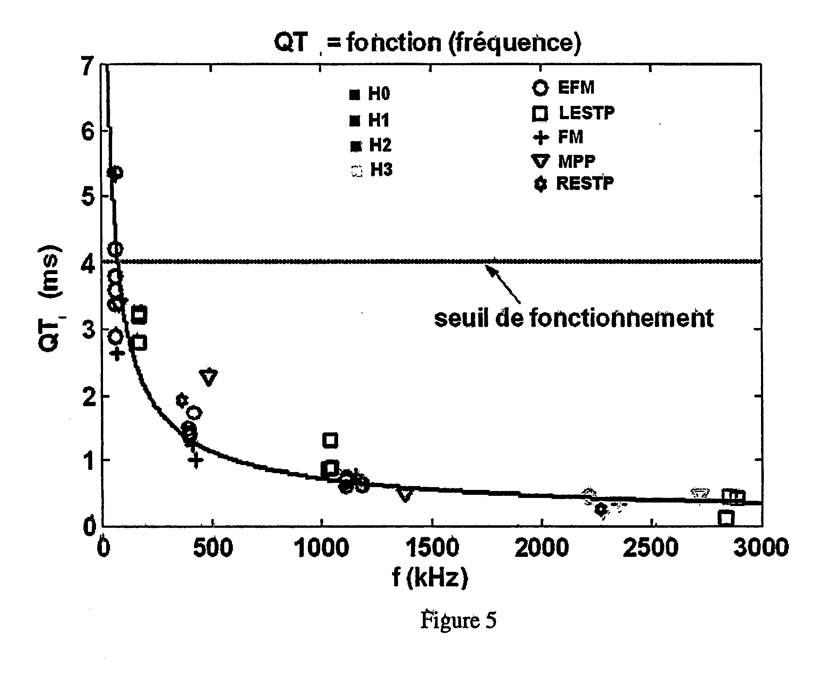

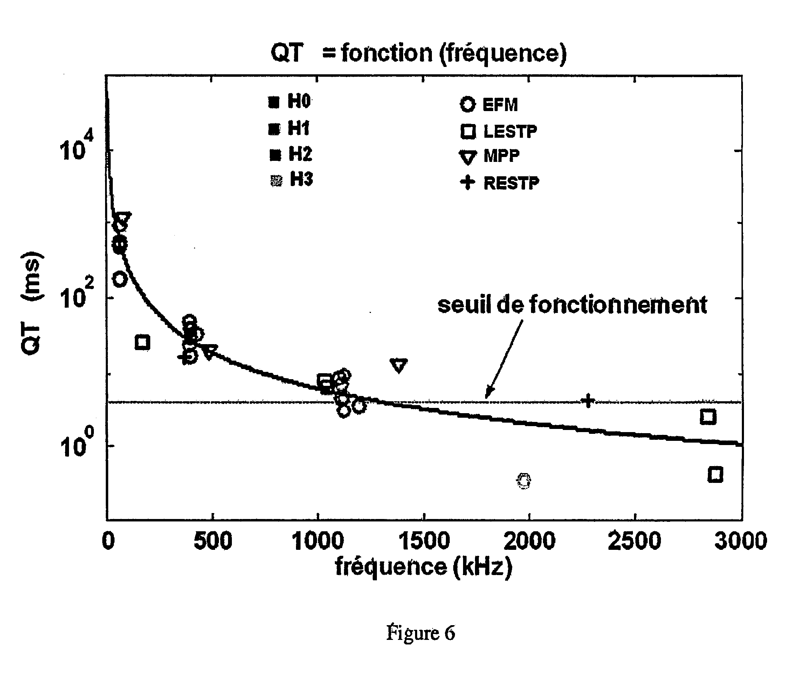

Il est entendu qu'aux fins de la présente demande, la notion d'état du système supérieur ou inférieur à un seuil de fonctionnement est relative et dépend des mesures utilisées. Par soucis de cohérence avec les figures 5 et 6, nous considèrerons que l'état du système est satisfaisant lorsqu'il est inférieur ou égal au seuil de fonctionnement, de sorte que selon l'invention, lorsque celui-ci est supérieur, on cherche des harmoniques plus élevés.

L'invention concerne également un système de microscopie à force atomique comprenant un embout de sonde placé sur une extrémité d'un bras de levier, des moyens d'oscillation apte à faire osciller ledit embout de sonde sensiblement selon la fréquence fondamentale dudit bras de levier, et des moyens de balayage destinés à produire une translation entre l'embout de la sonde oscillant et la surface de l'échantillon de sorte que l'embout de la sonde interagisse avec ladite surface, ledit système comprenant des moyens de contrôle apte à contrôler lesdits moyens d'oscillation pour faire varier la fréquence d'oscillation dudit embout selon une pluralité d'harmoniques dudit bras de levier, ledit systèmes comprenant en outre des moyens de détection de l'interaction entre l'embout de la sonde et ladite surface, lesdits moyens de détection étant aptes à fournir un signal représentatif de données de ladite surface, **caractérisé en ce que** lesdits moyens de contrôle comprennent une entrée recevant un paramètre représentatif d'un seuil de fonctionnement dudit système, pour faire varier la fréquence d'oscillation dudit embout selon au moins un harmonique dudit bras de levier lorsque ledit signal correspond à un état dudit système supérieur audit seuil de fonctionnement.

Ce système convient pour la mise en oeuvre du procédé défini précédemment.

On comprendra mieux l'invention à l'aide de la description, faite ci-après à titre purement explicatif, d'un mode de réalisation de l'invention, en référence aux figures annexées :

- la figure 1 illustre un microscope à force atomique tel que connu dans l'art antérieur ;
- la figure 2 illustre un microscope à force atomique à amplitude contrôlée selon l'invention ;
- la figure 3 illustre le procédé d'automatisation du calcul des données de surface par augmentation de l'ordre des harmoniques ;
- la figure 4 illustre les différents modes de vibration d'un bras de levier fixé à une extrémité, y compris les modes correspondant aux harmoniques supérieurs utilisés dans la présente invention ;
- la figure 5 illustre le temps de réponse du capteur en fonction de la fréquence d'excitation, par rapport à un seuil de fonctionnement $\tau_f$, pour différents types de capteurs, dans l'air ;
- la figure 6 illustre le temps de réponse du capteur en fonction de la fréquence d'excitation, par rapport à un seuil de fonctionnement $\tau_f$, pour différents types de capteurs, dans le vide ;

- les figures 7a à 7c illustrent les courbes de réponses des différents vibreurs.

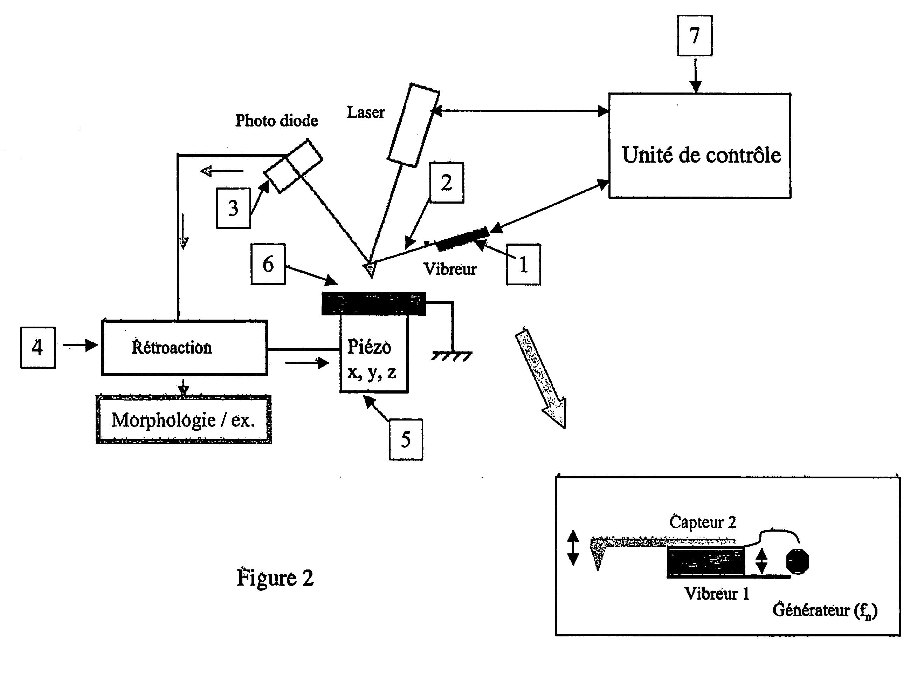

Illustré figure 2, le microscope à force atomique selon l'invention comprend de façon connue en soi un moyen d'oscillation 1 par exemple sous la forme d'un vibreur 1 , qui excite un capteur 2, composé d'un bras de levier et d'un embout de sonde. Le mouvement du levier - et de la pointe qui lui est liée - fait, par exemple, varier le signal réfléchi du laser, qui est alors détecté par un moyen de détection sous la forme d'une photodiode 3. Le signal issu de la photodiode est alors utilisé pour contrôler une unité de rétroaction 4 qui contrôle un dispositif piézo-électrique en x,y,z 5 associé à l'échantillon 6, la rétroaction ayant lieu sur la composante z, et un balayage étant réalisé en x,y. La morphologie de l'échantillon 6 est alors obtenue en sortie de la boucle de contre-réaction.

Selon l'invention, le dispositif comprend en outre une unité de contrôle 7 destinée à contrôler la fréquence du vibreur 1 et la courbe de résonance du capteur qui lui est associée (par exemple, amplitude et phase, fréquence de résonance et coefficient de qualité $Q_n$). L'unité de contrôle est agencée pour sélectionner les fréquences correspondant au fondamental du capteur 2, ainsi qu'à différents harmoniques d'ordre supérieur du capteur.

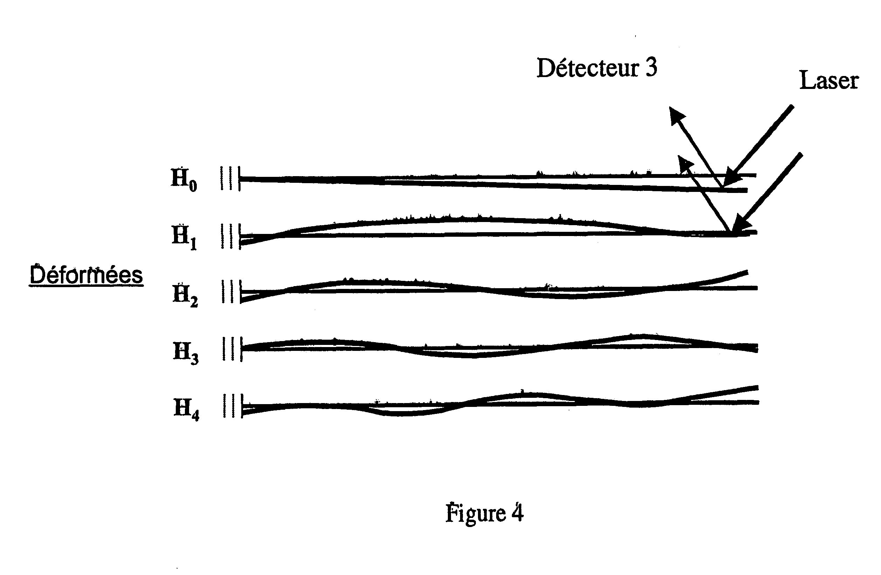

Aux fins de la présente demande, on appellera « harmonique d'ordre supérieur » toute fréquence de vibration du capteur selon un mode propre différent du fondamental. Le fondamental sera noté $H_0$, et les harmoniques associées $H_1, H_2, ... H_n$. Les modes vibratoires d'une poutre vibrante sont rappelés figure 4.

Le contrôleur 7 permet donc d'exciter le vibreur 1 selon l'un quelconque des modes $H_0,... H_n$ du capteur 2, et est donc adapté pour des hautes fréquences d'excitation, typiquement supérieurs à 2 MHz.

L'homme du métier comprendra donc qu'en augmentant l'ordre de l'harmonique utilisé pour la vibration, on fait décroître le temps de réponse du capteur, ce qui permet un balayage plus rapide sur la surface de l'échantillon à analyser.

On définit alors un paramètre $\tau_f$ correspondant au temps de réponse acceptable en termes de temps de calcul et donc de vitesse de balayage.

La figure 5 illustre le temps de réponse du capteur en fonction de la fréquence d'excitation, et ce par rapport au seuil de fonctionnement $\tau_f$, pour différents types de capteurs, dans l'air.

On constate sur cette figure la façon dont le temps de réponse décroît avec la fréquence d'oscillation. Ainsi, avec un seuil de fonctionnement tel que défini en trait horizontal plein, on constate d'une part que pour quelques types de capteurs, même à la fréquence fondamentale, le temps de réponse est trop élevé pour permettre un fonctionnement satisfaisant (point de la courbe au-dessus du seuil). L'invention permet alors, en travaillant sur un harmonique supérieur grâce à l'unité de contrôle, de faire fonctionner le système en dessous du seuil, et donc de façon satisfaisante.

On constate d'autre part que si l'on désire diminuer le seuil de fonctionnement, et donc augmenter encore les performances du dispositif, il est nécessaire pour la plupart des capteurs, de se placer sur des harmoniques supérieurs. Ceci est également rendu possible par l'unité de contrôle 7.

La figure 6 illustre cette fois le temps de réponse du capteur en fonction de la fréquence d'excitation, et ce par rapport au même seuil de fonctionnement $\tau_f$, pour différents types de capteurs, dans le vide.

On note déjà dans le vide, avec l'échelle telle qu'illustrée, la très forte décroissance du temps de réponse - due également à celle du facteur de qualité - avec la fréquence d'excitation.

Aucun capteur ne peut alors permettre un balayage satisfaisant pour sa fréquence fondamentale, ni même, pour la plupart, pour l'harmonique d'ordre 1.

Selon l'invention, on peut alors paramétrer le dispositif de contrôle 7 pour fixer la fréquence d'oscillation à des harmoniques d'ordre supérieur 1, 2, ou plus, dans le cas d'un travail dans le vide.

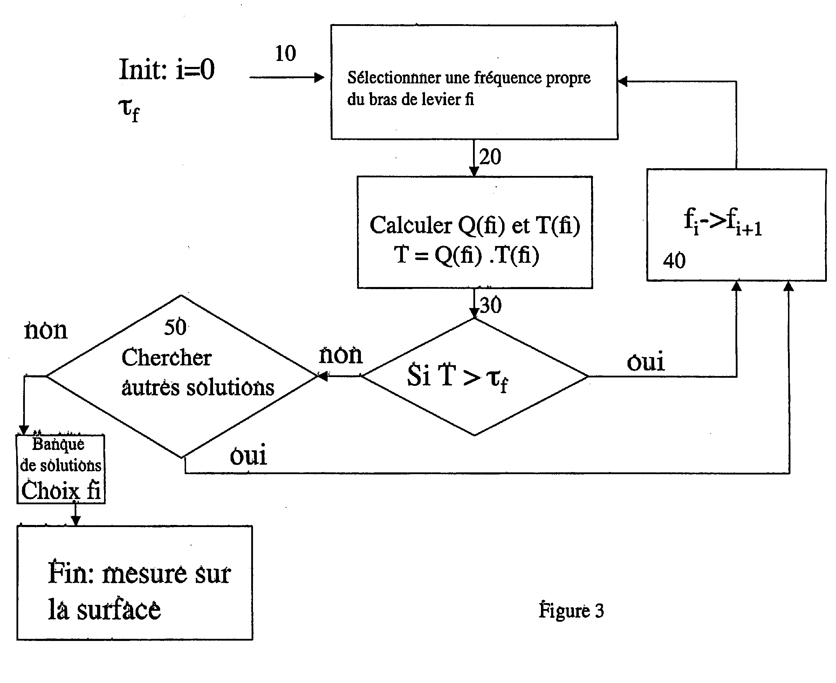

Illustré figure 3, l'invention fournit également un procédé pour mettre en oeuvre automatiquement le mode de fonctionnement optimal d'un microscope à force atomique à fréquence variable.

Pour cela, l'unité de contrôle comprend des moyens de calculs pouvant prendre en entrée les paramètres du capteur, et rendant en sortie un contrôle du moyen d'oscillation 1 à travers le vibreur.

On initialise 10 le programme de contrôle à une fréquence d'oscillation correspondant au fondamental du capteur. Il est cependant entendu qu'on peut également l'initialiser à un harmonique d'ordre supérieur si l'on sait que l'on travaille dans le vide et que le fondamental sera inutilisable.

On calcule 20 alors le temps de stabilisation lié au facteur de qualité du capteur dans ce mode de vibration, et on teste 30 si ce temps de stabilisation est inférieur au temps seuil $\tau_f$ prédéfini.

S'il ne l'est pas, on itère 40 le procédé en passant à un harmonique d'ordre supérieur $H_i -> H_{i+1}$. La valeur maximum de i peut être pré-définie.

On note bien sûr que la courbe du temps de réponse en fonction de la fréquence étant décroissante, cet algorithme mis en oeuvre au niveau de l'unité de contrôle converge vers un ou des harmoniques satisfaisants, quel que soit le type de capteur utilisé.

Une fois un harmonique d'ordre supérieur $H_f$ satisfaisant identifié, on réalise alors de façon connue en soi la caractérisation de la surface de l'échantillon avec un mode vibrant $H_f$. Par ailleurs, il est entendu qu'une fois un harmonique acceptable sélectionné, il est également possible de chercher 50 des nouvelles solutions plus fines afin d'améliorer encore le niveau de fonctionnement du système. L'homme du métier est alors apte à déterminer un compromis acceptable entre le temps de traitement correspondant à la recherche des harmoniques, la qualité du dispositif en haute fréquence si l'on augmente trop la fréquence, et le résultat obtenu.

Ceci garantit que le balayage de la surface respecte bien les contraintes temporelles définies par le seuil $\tau_f$.

L'invention précédemment décrite est donc particulièrement adaptée pour une utilisation dans le vide ou dans l'ultra-vide (UHV), par exemple lorsque le microscope est associé à une pompe à vide et également à l'air ou sous atmosphère contrôlée lorsque l'on souhaite balayer rapidement.

Il est par ailleurs entendu que l'invention est utilisable en mode contact intermittent ou en mode sans contact. L'homme du métier est apte à réaliser l'adaptation du dispositif par des simples démarches de routine.

On note, de plus, que le système peut être utilisé pour caractériser des différences de propriétés mécaniques locales, à partir, par exemple, du signal dit « de morphologie » en comparant les résultats obtenus avec différents harmoniques. Ceci est applicable à l'air ou sous atmosphère contrôlée où généralement tous les harmoniques sont satisfaisants et sous vide (et UHV), dans la mesure où plusieurs harmoniques satisfaisants auront été déterminés.

En effet, la raideur apparente du capteur $K_n$, sur le mode n, devient $K_n = (f_n/f_0)^2 K_0$ et la gamme de raideurs couverte sera d'autant plus large que la gamme de fn sera étendue. Voyons en les conséquences sur l'imagerie dite « de morphologie ». Imaginons un matériau avec une « bosse » au centre d'un plan, supposons de plus que cette « bosse » présente une diminution de dureté locale par rapport au plan environnant. L'utilisation d'un harmonique élevé « durcit » le capteur par rapport à l'échantillon, ce qui favorise l'indentation locale, et atténue le « signal morphologie », si on se réfère à un harmonique faible. Pour simplifier, aux harmoniques bas la morphologie réelle reste visible, alors qu'elle disparaît aux harmoniques élevés.

Cette variation de raideur apparente permet: a) d'adapter la raideur effective du levier au matériau utilisé ou de conserver un embout constant (diamant, par exemple), b) d'augmenter la gamme de raideurs disponibles ($K_0$ varie de 1 à 50 N/m et le coefficient dû aux harmoniques varie de 1 à 100). Cette idée pourrait, par exemple, s'appliquer au contrôle qualité de matériaux (fabrication) mécaniquement polyphasés, au comptage de cellules biologiques sur support rigide. De plus, elle pourrait être étendue à d'autres systèmes résonnants que le microscope à force atomique aux fins d'examiner des aires de contact de dimensions très supérieures à la dizaine de nanomètres carrés.

On note par ailleurs que le système peut être utilisé en mode double passage dans lequel on détecte un premier profil de l'échantillon, puis, en rapprochant ou en éloignant la sonde en fonction de ce premier profil, on détecte à distance constante et contrôlée les variations des forces à longue distance (i.e. la dérivée de la force par rapport à la direction de vibration du capteur) ou des signaux électromagnétiques (optiques par exemple, si apparition d'un photovoltage sur le capteur). Il faut noter que, au second passage, la fréquence de résonance pratiquement utilisable est souvent différente (en général $H_0$ ou $H_1$, à la rigueur $H_2$) de celle définie précédemment pour l'acquisition de la morphologie ($H_2$, par exemple sous vide). L'expérience et la théorie ont montré que pratiquement seuls H0, H1, peut être H2 étaient utilisables pour détecter les gradients de force.

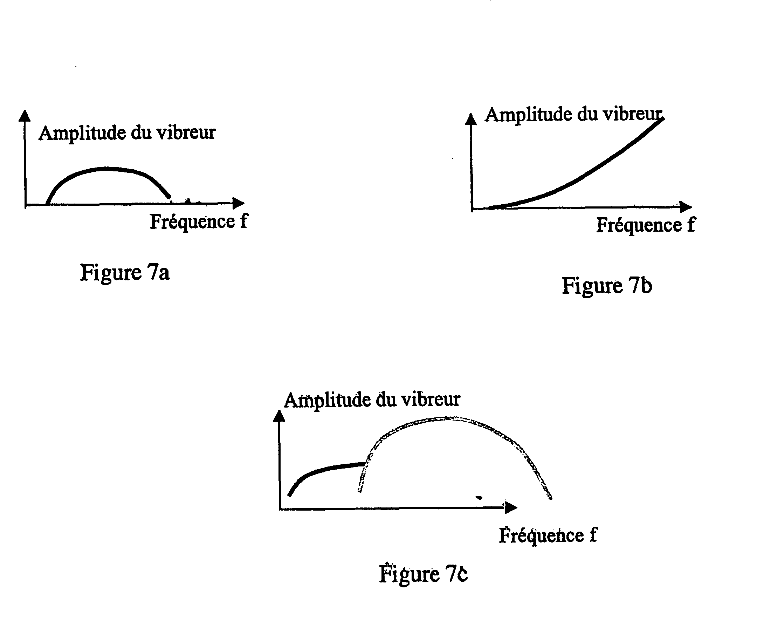

Enfin, afin de maintenir la qualité des mesures même pour les hautes fréquences d'oscillation, il est préférable de modifier les vibreurs existants. En effet, le profil de réponse en amplitude d'un vibreur tel qu'il est utilisé dans les microscopes de type AFM connus, est sensiblement tel qu'illustré sur la figure 7a.

On constate donc que l'amplitude associée diminue lorsque la fréquence de vibration augmente, et donc lorsque l'ordre de l'harmonique augmente selon le procédé de l'invention. Or, on cherche à travailler à amplitude sensiblement constante, et il est donc préférable de modifier les vibreurs existants, pour obtenir idéalement une réponse telle qu'illustrée figure 7b.

Pour ce faire, on peut choisir de positionner une pluralité de vibreurs en cascade. Ceu-ci peuvent être couplés, c'est-à-dire avec des fréquences de résonances proches, ou bien découplés.

Ceci provoque une extension du spectre de fréquence du vibreur et permet donc de s'adapter à l'utilisation des harmoniques supérieurs.

Avec un vibreur alimenté par un générateur basse fréquence associé à un autre vibreur haute fréquence, on peut par exemple obtenir un profil d'amplitude tel qu'illustré figure 7c.

De façon générale, on modifie donc les vibreurs existants afin d'adapter le dispositif à l'utilisation des haute fréquence. L'homme du métier est alors apte à adapter l'électronique et la rétroaction à ce nouveau type de vibreur.

De façon générale, éventuellement on modifiera également les capteurs de façon à produire des réponses en fréquences adaptées aux travaux souhaités en adaptant le coefficient de qualité de la résonance Qn (f) associé à Hn. Par exemple, à l'air ou sous atmosphère contrôlée et aussi sous vide, pour balayer rapidement, on a intérêt à faire décroître Qn(f) avec la fréquence f, si l'on se réfère aux Fig. 5 et 6, et pour élargir la gamme de raideurs dynamiques Kn, on a intérêt à maintenir Qn (f) le plus constant possible.

L'invention est décrite dans ce qui précède à titre d'exemples. Il est entendu que l'homme du métier est à même de réaliser différentes variantes de l'invention sans pour autant sortir du cadre du brevet.

## Revendications

**1.** Système de microscopie à force atomique comprenant un embout de sonde placé sur une extrémité d'un bras de levier (2), des moyens d'oscillation (1) apte à faire osciller ledit embout de sonde sensiblement selon la fréquence fondamentale dudit bras de levier, et des moyens de balayage (5) destinés à produire une translation entre l'embout de la sonde oscillant et la surface de l'échantillon de sorte que l'embout de la sonde interagisse avec ladite surface, ledit système comprenant des moyens de contrôle (7) apte à contrôler lesdits moyens d'oscillation pour faire varier la fréquence d'oscillation dudit embout selon une pluralité d'harmoniques dudit bras de levier, ledit système comprenant en outre des moyens de détection de l'interaction entre l'embout de la sonde et ladite surface, lesdits moyens de détection étant aptes à fournir un signal représentatif de données de ladite surface, **caractérisé en ce que** lesdits moyens de contrôle comprennent une entrée recevant un paramètre représentatif d'un seuil de fonctionnement dudit système, pour faire varier la fréquence d'oscillation dudit embout selon au moins un harmonique dudit bras de levier lorsque ledit signal correspond à un état dudit système supérieur audit seuil de fonctionnement.

**2.** Système de microscopie à force atomique selon la revendication 1, comprenant en outre une unité de traitement dudit signal.

**3.** Système selon la revendication 1 ou 2, dans lequel lesdits moyens d'oscillations comprennent une pluralité de vibreurs en cascade.

**4.** Procédé de mesure des caractéristiques de la surface d'un échantillon à partir d'un embout de sonde placé sur une extrémité d'un bras de levier ledit bras de levier étant apte à osciller par l'intermédiaire d'un vibreur, dans un système de microscopie à force atomique, comprenant les étapes consistant à :

- faire osciller ledit embout du bras de levier selon une première fréquence d'oscillation correspondant à un fondamental dudit bras de levier ;
- produire un signal représentatif de ladite oscillation
- définir un paramètre correspondant à un seuil de fonctionnement dudit système de microscopie
- analyser ledit signal et, si ledit signal correspond à un état dudit système supérieur audit seuil de fonctionnement,

ø faire varier la fréquence d'oscillation dudit embout du bras de levier en changeant la fréquence d'excitation du vibreur selon au moins un harmonique d'ordre supérieur dudit bras de levier.

ø Sélectionner un desdits harmoniques d'ordre supérieur correspondant pour lequel le signal représentatif de l'oscillation correspond à un état du système inférieur ou égal audit seuil de fonctionnement ;

ø Faire interagir lendit embout de sonde oscillant audit harmonique supérieur sélectionné pour la mesure des caractéristiques de la surface dudit échantillon.

## Claims

**1.** An atomic force microscopy system comprising a probe tip positioned on one end of a lever arm (2), oscillating means (1) able to oscillate said probe tip substantially according to the fundamental frequency of said lever arm, and scanning means (5) intended to produce a translation between the oscillating probe tip and the sample surface, so that the probe tip can interact with said surface, said system comprising control means (7) able to control said oscillating means to vary the oscillation frequency of said tip according to a plurality of harmonics of said lever arm, said system further comprising means for detecting the interaction between the probe end and said surface, said detection means being able to provide a signal representative of data from said surface, **characterized in that** said control means comprise an input receiving a parameter representative of a threshold for the operation of said system, to vary the oscillation frequency of said tip according to at least one harmonic of said lever arm when said signal corresponds to a condition of said system higher than said operation threshold.

**2.** An atomic force microscopy system according to claim 1, further comprising a unit for processing said signal.

**3.** An atomic force microscopy system according to claim 1 or 2, wherein said oscillation means comprise a plurality of vibrators in cascade.

**4.** A method for measuring the characteristics of the surface of a sample from a probe tip positioned on one end of a lever arm, said lever arm being able to oscillate through the action of a vibrator, in an atomic force microscopy system, comprising the following steps:

- oscillating said lever arm tip according to a first oscillation frequency corresponding to a fundamental frequency of said lever arm;
- producing a signal representative of said oscillation;

- defining a parameter corresponding to a threshold for the operation of said microscopy system;
- analyzing said signal and, if said signal corresponds to a condition of said system higher than said operation threshold,

. varying the oscillation frequency of said lever arm tip by changing the vibrator excitation frequency according to at least one higher order harmonic of said lever arm;
. selecting a corresponding one of said higher order harmonic for which the signal representative of the oscillation corresponds to a condition of the system lower than or equal to said operation threshold;
. having said oscillating probe tip interact with said selected higher order harmonic for measuring the characteristics of the surface of said sample.

**Patentansprüche**

1. System für die Mikroskopie mit Atomkraft, das einen Sondenansatz umfaßt, der auf einem Ende eines Hebelarms (2) plaziert ist, Oszillationsmittel (1), die geeignet sind, den besagten Sondenansatz deutlich nach der Grundfrequenz des besagten Hebelarms schwingen zu lassen, und Abtastmittel (5), die eine Translation zwischen dem schwingenden Sondenansatz und der Oberfläche der Probe erzeugen sollen, damit der Ansatz der Sonde mit der besagten Oberfläche zusammenwirkt, wobei das besagte System ein Kontrollmittel (7) umfaßt, das geeignet ist, die besagten Oszillationsmittel zu kontrollieren, um die Schwingungsfrequenz des besagten Ansatzes nach einer Mehrzahl von Harmonischen des besagten Hebelarms variieren zu lassen, wobei das besagte System außerdem Mittel zur Entdeckung des Zusammenwirkens zwischen dem Ansatz der Sonde und der besagten Oberfläche umfaßt, wobei die besagten Entdeckungsmittel geeignet sind, ein für Daten der besagten Oberfläche repräsentatives Signal zu liefern, **dadurch gekennzeichnet, daß** die besagten Kontrollmittel einen Eingang umfassen, der einen Parameter aufnimmt, der repräsentativ für eine Funktionsschwelle des besagten Systems ist, um die Schwingungsfrequenz des besagten Ansatzes nach mindestens einer Harmonischen des besagten Hebelarms variieren zu lassen, wenn das besagte Signal einem Zustand des besagten Systems über der besagten Funktionsschwelle entspricht.

2. System für die Mikroskopie mit Atomkraft nach Anspruch 1, **dadurch gekennzeichnet, daß** es außerdem eine Verarbeitungseinheit für das besagte Signal umfaßt.

3. System nach dem vorstehenden Anspruch 1 oder 2, wobei die besagten Oszillationsmittel eine Mehrheit von Vibratoren in Kaskadenanordnung umfassen.

4. Verfahren zum Messen der Merkmale der Oberfläche einer Probe ab einem Sondenansatz, der auf einem Ende eines Hebelarms plaziert ist, wobei der besagte Hebelarm geeignet ist, vermittels eines Vibrators in einem System für die Mikroskopie mit Atomkraft zu schwingen, das folgende Schritte umfaßt:

- Den besagten Ansatz des Hebelarms nach einer ersten Schwingungsfrequenz schwingen lassen, die einer Grundschwingung des besagten Hebelarms entspricht;
- Ein für die besagte Schwingung repräsentatives Signal erzeugen;
- Einen Parameter definieren, der einer Funktionsschwelle des besagten Systems für die Mikroskopie entspricht;
- Das besagte Signal auswerten, und wenn das besagte Signal einem Zustand des besagten Systems über der besagten Funktionsschwelle liegt,

. Die Schwingungsfrequenz des besagten Ansatzes des Hebelarms variieren lassen, wobei die Erregungsfrequenz des Vibrators nach mindestens einer Harmonischen höherer Ordnung des Hebelarms gewechselt wird;
. Eine der besagten Harmonischen entsprechender höherer Ordnung wählen, für die das für die Schwingung repräsentative Signal einem Systemzustand unter oder gleich der besagten Funktionsschwelle entspricht;
. Den besagten schwingenden Sondenansatz der besagten mit der oberen Harmonischen zusammenwirken lassen, die für die Messung des Merkmals der Oberfläche der besagten Probe gewählt worden war.

Figure 1

Figure 2

EP 1 896 824 B1

EP 1 896 824 B1

Init: i=0

$\tau_f$

10 →

Sélectionnner une fréquence propre
du bras de levier fi

20

Calculer Q(fi) et T(fi)
$T = Q(fi) . T(fi)$

30

Si $T > \tau_f$

oui

non

$f_i \rightarrow f_{i+1}$

40

non

50
Chercher
autres solutions

non

oui

Banque
de solutions
Choix fi

Fin: mesure sur
la surface

Figure 3

Figure 4

EP 1 896 824 B1

Figure 5

Figure 6

EP 1 896 824 B1

Figure 7b

Figure 7c

Figure 7a

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.MERTZ ; O. MARTI ; J. MLYNEK.** Regulation of a micro-cantilever response by force feedback. *Applied Physics Letters,* 10 Mai 1993, vol. 62 (19), 2344

- **STARK et al.** *Tapping-mode atomic foce microscopy and phase-imaging in higher eigenmodes,* 1999
- **O. SAHIN et al.** Harmonic Cantilevers for Nanomechanical Sensing of Elastic Properties. *proceedings de Transducers,* vol. 03, 1124-1127